# EUROPÄISCHE PATENTANMELDUNG

(11) **EP 0 741 092 A2**
(43) Veröffentlichungstag der Anmeldung: **06.11.1996**
(21) Anmeldenummer: 96106230.4
(22) Anmeldetag: 20.04.1996
(51) Int. Cl.: B65G 67/60

(54) **Vorrichtung zum kontinuierlichen Entladen von Losgut aus Schiffen oder sonstigen Behältnissen**

(30) Priorität: 05.05.1995 DE 19516472; 15.03.1996 DE 19610219
(71) Anmelder: PWH Anlagen + Systeme GmbH, D-66386 St. Ingbert-Rohrbach (DE)
(72) Erfinder: Arend, Jürgen, 66123 Saarbrücken (DE); Steckel, Horst, Dipl.-Ing., 66386 St. Ingbert (DE)

(57) **Zusammenfassung**

Die Erfindung betrifft eine Vorrichtung zum kontinuierlichen Entladen von Losgut aus Schiffen (1) oder sonstigen Behältnissen, beispielsweise Waggons o. dgl., die auch zur Beladung der Schiffe (1) und der sonstigen Behältnisse verwendbar ist. Die Vorrichtung weist ein parallel zu dem Schiff (1) bzw. dem sonstigen Behältnis verfahrbares Portal (2) und einen darauf angeordneten heb-, senk- und drehbaren Ausleger (3) auf. Bei dieser Vorrichtung ist an der Spitze des Auslegers (3) ein Schalenelevator (4) angebracht, der an seinem unteren Umlenkende zwei gegenläufig arbeitende und zwangsgetriebene Zuführ- und Stopfschnecken (5) aufweist, die quer zu dem Schalenelevator (4) angeordnet sind. Der Schalenelevator (4) ist in einem an dem Ausleger (3) vorgesehenen Drehpunkt (6) angelenkt und - bei gleichzeitiger Auf- bzw. Abbewegung des Auslegers (3) - mittels einer Hydraulik derart hin- und herbewegbar, daß das untere Ende des Schalenelevators (4) sich parallel zum Boden des Schiffes (1) bzw. des sonstigen Behältnisse bewegt.

## Beschreibung

Die Erfindung betrifft eine Vorrichtung zum kontinuierlichen Entladen von Losgut aus Schiffen oder sonstigen Behältnissen, beispielsweise Waggons o. dgl., die auch zur Beladung der Schiffe und der sonstigen Behältnisse verwendbar ist, mit einem parallel zu dem Schiff bzw. dem sonstigen Behältnis verfahrbaren Portal und einem darauf angeordneten heb-, senk- und drehbaren Ausleger. Die Vorrichtung kann sowohl landgebunden als auch mittels Pontons schwimmfähig sein.

Bisher werden je nach Einsatzfall und Kundenvorstellung in Abhängigkeit von der jeweiligen Schiffsgröße und Förderleistung sowie insbesondere unter Berücksichtigung der Art und Beschaffenheit des zu fördernden Losgutes sowie unter Berücksichtigung der ständig steigenden Anforderungen des Umweltschutzes sowohl beim Entladen als auch beim Beladen von Schiffen oder sonstigen Behältnissen die unterschiedlichsten Vorrichtungen eingesetzt.

Bekannte Vorrichtungen zum kontinuierlichen Entladen von Losgut aus Schiffen oder sonstigen Behältnissen sind entweder nicht auch zur Beladung geeignet oder sind sehr aufwendig. Sie haben beispielsweise ein sehr hohes Gewicht und/oder einen hohen Energieverbrauch und erfordern einen erheblichen Wartungsaufwand und somit hohe Betriebskosten.

Der Erfindung liegt die Aufgabe zugrunde, eine Vorrichtung zu schaffen, die nicht nur zum Entladen, sondern auch zum Beladen von Schiffen oder sonstigen Behältnissen verwendet werden kann, so daß die gleiche Vorrichtung für möglichst viele Anwendungsfälle geeignet ist. Die Vorrichtung soll bei unterschiedlichen Schiffsgrößen sowie bei unterschiedlichen örtlichen Gegebenheiten und Förderleistungen verwendet werden können. Mit der Vorrichtung soll ferner eine Vielzahl von Materialien unterschiedlichster Art und Beschaffenheit unter Berücksichtigung der Forderungen des Umweltschutzes, also beispielsweise mit möglichst geringem Energiebedarf, entladen oder beladen werden können. Darüber hinaus soll das Losgut weitgehend gegen Umwelteinflüsse geschützt sein.

Die Lösung der gestellten Aufgabe besteht bei einer Vorrichtung der eingangs erwähnten Art darin, daß an der Spitze des Auslegers ein Schalenelevator angebracht ist, der an seinem unteren Umlenkende zwei gegenläufig arbeitende und zwangsgetriebene Zuführ- und Stopfschnecken aufweist, die quer zu dem Schalenelevator angeordnet sind, wobei der Schalenelevator in einem an dem Ausleger vorgesehenen Drehpunkt angelenkt und - bei gleichzeitiger Auf- bzw. Abbewegung des Auslegers - mittels einer Hydraulik derart hin- und herbewegbar ist, daß das untere Ende des Schalenelevators sich parallel zum Boden des Schiffes bzw. des sonstigen Behältnisse bewegt.

Durch die Zuführ- und Stopfschnecken, die am unteren Umlenkende des Schalenelevator - also unmittelbar im Materialaufnahmebereich - angeordnet sind, und deren Länge der jeweiligen Förderleistung angepaßt sind, wird bei der Entladung des Schiffes oder des sonstigen Behältnisses das zu entladende Losgut ständig dem Schalenelevator zugeführt, so daß stets eine maximale und gleichmäßige Füllung der einzelnen Schalen des Schalenelevators mit Losgut erreicht sind. Durch den Schalenelevator wird dann das Losgut hochgetragen. Durch die Bewegung des unteren Endes des Schalenelevators parallel zum Boden des Schiffes bzw. des sonstigen Behältnisse - eine sogenannte Kickbewegung - wird bei gleichzeitigem taktweisen Absenken des Auslegers das zu entladende Losgut lagenweise in einer von der Länge der Zuführ- und Stopfschnecken bestimmten Breite flächenförmig in beiden Kickrichtungen abgetragen. Hierbei erfolgt die Kickbewegung vornehmlich quer zum Schiff bzw. quer zu dem sonstigen Behältnis. Der bei der Kickbewegung mögliche Schwenkbereich wird durch die jeweilige Größe des Schiffes bzw. des sonstigen Behältnisses und die Breite der Luke oder der Lukenöffnung bestimmt. Die Kickbewegung sollte jedoch mit Rücksicht auf die Rutschfähigkeit des jeweiligen Losgutes in der mitschwenkenden, am oberen Abwurf des Schalenelevators zur Übergabe des Losgutes vom Schalenelevator auf das Auslegerband angeordneten Übergabeschurre einen bestimmten Winkel nicht überschreiten.

Die Kickbewegung des unteren Endes Schalenelevators sowie die taktweisen Abwärtsbewegungen des Auslegers stellen - abgesehen von den Bewegungen der Förderelemente - die einzigen Arbeitsbewegungen der Vorrichtung während der Abtragung einer Materiallage dar, so daß der Ausleger während der Entladung einer Schiffsluke immer in einer bestimmten Stellung, vorzugsweise bei 90°, also quer zum Schiff ausgerichtet bleibt und keine zusätzlichen Drehbewegungen, beispielsweise zum Erreichen der Lukenecken, ausführen muß.

Nach dem Abtragen einer gesamtem Materialfurche, die je nach Schiffsgröße bis auf den Lukenboden oder nur bis zu einer bestimmten Furchentiefe ausgeführt wird, ist ein Verfahren der Vorrichtung quer zum Schiff erforderlich, um dann mit der neuerlichen Abtragung einer Furche beginnen zu können.

Durch die erfindungsgemäße Ausgestaltung ist die Vorrichtung bei Handbetrieb von dem Geräteführer leicht zu überwachen, währen der Automatikbetrieb nur von wenigen Parametern abhängig ist, wie Schwenkwinkel und Absenktiefe. Hierfür kann eine einfache und unkomplizierte Steuerung eingesetzt werden.

Wegen der nach Koordinaten ausgerichteten Entladebewegungen der erfindungsgemäßen Vorrichtung treten für die Tragkonstruktion des Schalenelevators und des Auslegers und auch für das Portal nur in einer Richtung statische Lasten auf, wodurch sich die konstruktive Auslegung dieser Teile verhältnismäßig einfach gestalten läßt und die Konstruktion selbst verhältnismäßig leicht ausgeführt werden kann, so daß eine erhebliche Verringerung des Gewichtes der erfindungsgemäßen Vorrichtung erzielt wird. Die auftretenden Kräfte werden nicht als Biegemomente, sondern lediglich als Druck- oder Zugkräfte von der Konstruktion aufgenommen.

Eine Drehbewegung des Auslegers ist lediglich für das Umfahren von Hindernissen beim Lukenwechsel erforderlich, also dann, wenn sich zwischen den Luken des Schiffes Aufbauten, wie Maste oder Kräne befinden, oder aber für das Schwenken des Auslegers in eine Reparaturstellung bzw. in die Außerbetriebstellung.

In Ausgestaltung der Erfindung weist zum Erreichen der notwendigen Kickbewegung die Hydraulik zwei hintereinander angeordnete Hydraulikzylinder auf, die jeweils gleichzeitig betätigt werden können und die zwischen dem oberen Ende des Schalenelevators und dem Ausleger angeordnet sind. Dadurch sind nur verhältnismäßig kurze Wege jedes einzelnen Hydraulikzylinders notwendig.

In weiterer Ausgestaltung der Erfindung ist für das Heben und Senken des Auslegers an dessen Gegengewichtsseite ein Hydraulikzylinder angelenkt, dessen anderes Ende über ein mit dem Drehteil des Auslegers fest verbundenem, nach unten gerichtetes Horn gelenkig verlagert ist. Das Horn kann bei Bedarf nach unten verlängert werden. Sollte die für den Zylinderhub erforderliche Länge nicht ausreichen, kann der obere Anlenkpunkt der Zylinderstange durch eine am Ausleger angebrachte Jochkonstruktion nach oben verschoben werden.

Bei einer bevorzugten Ausführungsform der Erfindung ist der Schalenelevator in seinem Förderbereich von einem Gehäuse vollständig umschlossen. Unter Förderbereich ist sowohl der Bereich zwischen den beiden Umlenkungen des Schalenelevators zu verstehen, als auch derjenige Bereich, in dem das Losgut von den Schalen des Schalenelevators aufgenommen wird. Im Normalfall reicht es aus, daß nur der Förderstrang von dem Gehäuse umschlossen ist. Mit Rücksicht auf den Umweltschutz kann es aber, beispielsweise bei sehr feinem Material, zweckmäßig sein, auch den abwärts führenden Strang zu umschließen.

Das Gehäuse, das die Bewegungsbahn der Schalen des Schalenelevators eng umschließt, weist einen rechteckförmigen Querschnitt auf. Durch den somit vollständig gekapselten Schalenelevator ist ein Herabfallen von Losgut aus dessen Schalen - und damit jegliche Staubbelastung der Umwelt - völlig ausgeschlossen, und zwar auch dann, wenn infolge der Kickbewegungen eine Schrägstellung der Schalen des Schalenelevators eintritt.

Der Schalenelevator ist zweckmäßigerweise als Kettenförderer mit einer oder mehreren zwischen zwei Umlenkstationen gespannten Ketten ausgebildet, wobei an den Ketten in bestimmten Abständen geschlossene schalenförmig gebogene Mitnehmer mittels Bolzen befestigt sind. Ein derartiger Schalenelevator erfordert nur eine geringe Wartung. Bei einem Schalenelevator mit nur einer Kette ist diese als Laschenkette ausgebildet, während bei einem Schalenelevator mit zwei Ketten diese sowohl als Laschenkette als auch als Rundgliederketten ausgebildet sein können.

Nach einem weiteren Merkmal der Erfindung sind die schalenförmig gebogenen Mitnehmer des Schalenelevators mit mindestens einer, ebenfalls mittels Bolzen an den Ketten befestigten Strebe gehalten, wobei zweckmäßigerweise der Bolzen, mit dem eine Strebe eines bestimmten Mitnehmers an der Kette befestigt ist, gleichzeitig zur Befestigung des darüberliegenden Mitnehmers dient. Hierdurch ist bei einem Minimum an konstruktivem Aufwand und an Bauelementen eine sichere Aufnahme der Lastmomente gewährleistet. Durch die schrägverlaufenden Streben heben sich die an den einzelnen Mitnehmern angreifenden Momente gegenseitig auf.

Die schrägverlaufenden Streben bewirken noch einen weiteren, sehr wesentlichen Vorteil. Während nämlich bei der üblichen Befestigung der becherförmigen Mitnehmer beim Auflaufen der Mitnehmer auf das Umlenkrad jeweils eine schlagartige Beschleunigung der Außenseiten der Mitnehmer auf etwa die doppelte Geschwindigkeit erfolgt, so daß erhebliche Schläge in den Gelenken auftreten, die zu einem erhöhten Verschleiß führen, wird durch die Streben - und zwar infolge des Vorlaufs des inneren, an der Kette befestigten Gelenkpunktes jeder Strebe - eine allmähliche Beschleunigung der Vorderkanten der Mitnehmer beim Auflaufen der Kette auf das Kettenrad und eine allmähliche Verzögerung der Vorderkanten der Mitnehmer beim Ablaufen der Kette vom Kettenrad bewirkt. Dadurch werden die bei der Beschleunigung der Außenseiten der Mitnehmer auftretenden Kräfte erheblich herabgesetzt.

Bei einer bevorzugten Ausführungsform der Erfindung sind die an dem Schalenelevator angeordneten Zuführ- und Stopfschnecken mit der unteren Umlenkwelle des Schalenelevators fest gekoppelt. Sie werden somit über die Umlenkwelle von den Ketten des Schalenelevators und dessen Antrieb zwangsläufig mit angetrieben, so daß für die Zuführ- und Stopfschnecken keine zusätzlichen Antriebseinheiten erforderlich sind.

Die erfindungsgemäße Vorrichtung kann noch dadurch verbessert werden, daß an dem Schalenelevator ein quer zu den Zuführ- und Stopfschnecken verlaufendes, hydraulisch heb- und senkbares Schild angeordnet ist. Dieses Schild verhindert, daß bei der jeweiligen Rückwärts-Schwenkbewegung - also in Richtung Kai - Losgut aus den Zuführ- und Stopfschnecken und aus dem Schöpfbereich des Schalenelevators herausläuft. Die Stellung des Schildes kann mittels eines Hydraulikzylinders den jeweiligen Erfordernissen angepaßt werden, um eine nahezu "besenreine" Entleerung des Laderaums zu erreichen.

Eine weitere Verbesserung der erfindungsgemäßen Vorrichtung besteht darin, daß der Einlaufquerschnitt des Schalenelevators mit einem einstellbaren Durchsatzbegrenzer versehen ist. Damit kann erforderlichenfalls eine Veränderung des Einlaufquerschnitts herbeigeführt werden.

Die Entleerung der Schalen des Schalenelevators an dessen oberem Umkehrende erfolgt zwischen den Ketten durch Gravitation. Für die Übergabe dieses aus dem Schiff entladenen Losgutes von dem Schalenelevator auf das Auslegerband ist eine Übergabeschurre vorgesehen, die seitlich aus dem Schalenelevator herausragt und die sich bis zum Auslegerband erstreckt. Bei den Kickbewegungen des Schalenelevators schwenkt die Übergabeschurre mit.

Eine Vereinfachung der erfindungsgemäßen Vorrichtung wird dadurch erzielt, daß der Ausleger als Rohr oder als Kastenkonstruktion und das Auslegerband als Gleitförderer ausgebildet ist, wobei der Innenraum des Auslegers mit einem Zwischenboden versehen ist, auf den sich der Obergurt des Auslegerbandes abstützt, während der Untergurt des Auslegerbandes auf der Unterseite des Innenraums des Auslegers gleitet. Hierdurch entfallen die sonst notwendigen Tragrollen für den Gurt des Auslegerbandes.

Für die Übergabe des Losgutes von dem Auslegerband auf ein im Bereich des Portals angeordnetes Förderband, beispielsweise auf ein Kaiband, ist eine Übergabeschurre vorgesehen. Diese Übergabeschurre kann als einfaches Rohr oder als Kaskade ausgebildet sein. Jedoch ist vorteilhafterweise die Übergabeschurre als Wendelschurre ausgebildet.

Für den Fall, daß die Forderung gestellt, die erfindungsgemäße Vorrichtung auch im Kombibetrieb - also sowohl bei der Entladung als auch bei der Beladung von Schiffen oder sonstigen Behältnissen - verwenden zu können, ist dies mit verhältnismäßig einfachen konstruktiven Maßnahmen, also mit nur geringem Aufwand, möglich.

In einfachster Weise kann die erfindungsgemäße Vorrichtung dadurch auch für das Beladen von Schiffen oder sonstigen Behältnissen verwendbar gemacht werden, daß das Auslegerband reversibel ausgebildet ist und daß für die Beladung des Schiffes bzw. des sonstigen Behältnisses eine Beladeschurre vorgesehen ist, die das in das Schiff bzw. in das sonstige Behältnis zu ladende Losgut von dem Auslegerband in das Schiff bzw. in das sonstige Behältnis leitet.

Für die Verwendung der erfindungsgemäßen Vorrichtung für das Beladen von Schiffen oder sonstigen Behältnissen ist im Bereich des Portals ein Zubringerband vorgesehen, dessen Gurt mittels eines an dem Portal angehängten - und somit mitfahrenden - Bandschleifenwagens angehoben wird, um das Losgut auf einen Zwischenförderer abzuwerfen. Der Zwischenförderer überbrückt die Strecke zwischen dem Abwurf des Bandschleifenwagens bis zum Übergabepunkt auf das Auslegerband.

Die Forderung nach einer schonenden und möglichst zerstörungsfreien Behandlung des Losgutes, beispielsweise bei Eisenerzpeletts oder Düngemitteln, kann dadurch erfüllt werden, daß zwischen dem Auslegerband und dem Schalenelevator eine mit dem Auslegerband mitschwenkende Übergabeschurre vorgesehen ist. In diesem Falle befördert der Schalenelevator das Losgut in umgekehrter Richtung; das Losgut wird somit von dem Schalenelevator regelrecht herabgetragen.

Eine sehr wesentliche Verbesserung der erfindungsgemäßen Einrichtung wird dadurch erzielt, daß für die Übergabe des aus dem Schiff entladenen Losgutes von dem Schalenelevator auf das Auslegerband ein Schneckenförderer vorgesehen ist, der seitlich aus dem Schalenelevator herausragt und sich bis zum Auslegerband erstreckt. Der Schneckenförderer transportiert das durch Gravitation von den Schalen des Schalenelevators herabfallende Losgut seitlich aus dem Bereich des Schalenelevators und übergibt das Losgut auf das neben dem Schalenelevator angeordnete Auslegerband.

Bei dem vorstehend beschriebenen Ausführungsbeispiele ist der Schneckenförderer zweckmäßigerweise horizontal zentrisch unter der Umkehrung des Schalenelevators, parallel zur Umkehrwelle, zwischen den auf- und abwärtsfördernden Kettensträngen angeordnet, so daß das innerhalb der Umkehrung des Schalenelevators durch Gravitation von den Schalen des Schalenelevators herabfallende Losgut unmittelbar in den Trog des Schneckenförderers gelangt, bzw., je nach Schrägstellung des Schalenelevators, durch eine Zwischenschurre in den Trog geleitet wird.

Die erfindungsgemäße Ausgestaltung der Vorrichtung bietet den Vorteil, daß der Schwenkpunkt des Schalenelevators genau in die Achse des Schneckenförderers gelegt werden kann, so daß bei der Schwenkbewegung des Schalenelevators keine Wanderung des Übergabepunktes auftritt, wie es bei einer Vorrichtung der Fall ist, bei der die Übergabe des Losgutes über eine mitschwenkende Schurre erfolgt. Dadurch ist es technisch wesentlich einfacher, die Übergabeeinrichtung gegen Witterungseinflüsse sowie auch gegen etwaigen Staubaustritt bei der Entladung von staubförmigem Losgut abzudichten.

Der Schneckenförderer kann mit einer eigenen Antriebseinrichtung versehen sein. Zweckmäßigerweise ist jedoch die Antriebswelle des Schneckenförderer mit der Antriebswelle des Schalenelevator verbunden. Dadurch erübrigt sich eine eigene Antriebseinrichtung für den Schneckenförderer.

Nach einem weiteren Merkmal des vorstehend beschriebenen Ausführungsbeispiels der Erfindung ist die Verbindung zwischen der Antriebswelle des Schneckenförderers und der Antriebswelle des Schalenelevators als Kettenvorgelege ausgebildet. Ein solches Kettenvorgelege ist einfach herzustellen und leicht zu warten.

Die erfindungsgemäße Einrichtung kann dadurch noch weiter verbessert werden, daß am unteren Ende des Schalenelevators ein Hydraulikzylinder vorgesehen ist, mit dem das untere Umlenkrad bzw. die unteren Umlenkräder zusammen mit dem Schild angehoben und abgesenkt werden können. Hierbei bleibt der aufwärtsführende Strang aufgrund des Materialgewichts stets gespannt. Für den abwärts führenden Strang können Führungen vorgesehen sein. Durch dieses Merkmal der Erfindung können die Bewegungen des Schiffes ausgeglichen werden.

Durch die erfindungsgemäße Gestaltung der Vorrichtung wird eine erhebliche Gewichtsreduzierung und damit eine erhebliche Kostenreduzierung erzielt. Ferner entsteht infolge des geringeren Gewichts der Vorrichtung eine entsprechend geringere Kaibelastung. Die erfindungsgemäße Vorrichtung ist auch in Kleinausführung als unabhängiges Mobilgerät mit eigenem Energieversorger einsetzbar, das auf Gummirädern verfahrbar sein kann.

Die Erfindung ist anhand der Zeichnung, in der Ausführungsbeispiele der erfindungsgemäßen Vorrichtung schematisch dargestellt sind, näher erläutert. Es zeigen:
- Fig. 1: eine Vorrichtung in Seitenansicht, wobei mehrere Stellungen des Auslegers und des Schalenelevators der Vorrichtung angedeutet sind;
- Fig. 2: einen Teil der in Fig. 1 dargestellten Vorrichtung in Vorderansicht, in größerem Maßstab;
- Fig. 3: eine andere Vorrichtung in Seitenansicht;
- Fig. 4: den oberen Abschnitt eines Schalenelevators im Längsschnitt;
- Fig. 5: den unteren Abschnitt eines Schalenelevators, ebenfalls im Längsschnitt;
- Fig. 6: ein der Fig. 2 entsprechender Teil einer anderen Vorrichtung, ebenfalls in Vorderansicht.

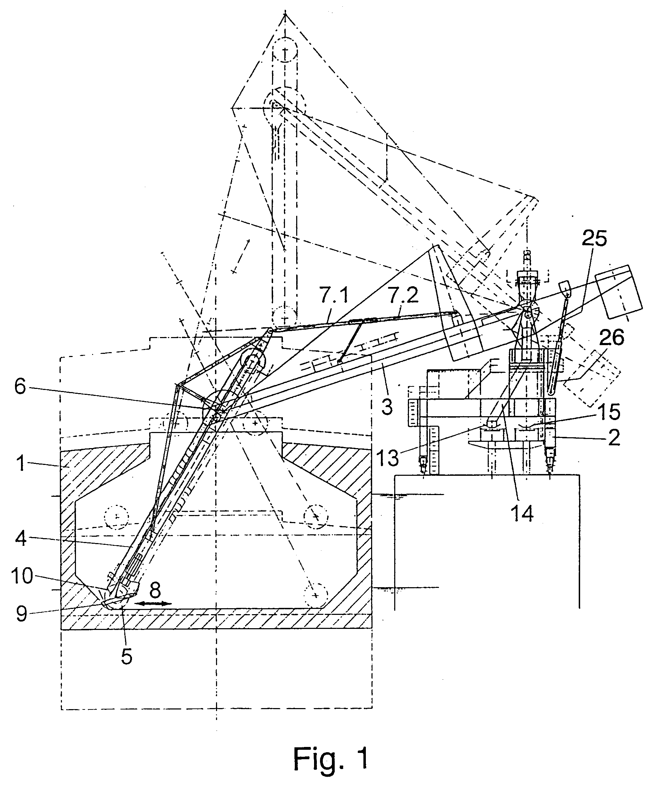

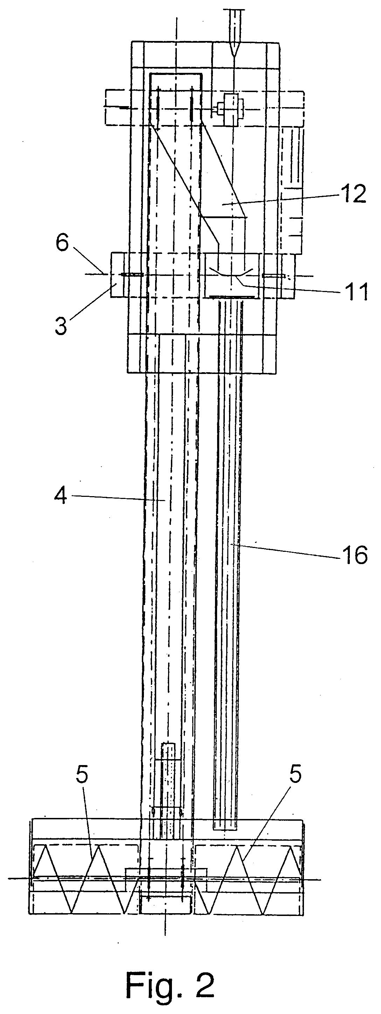

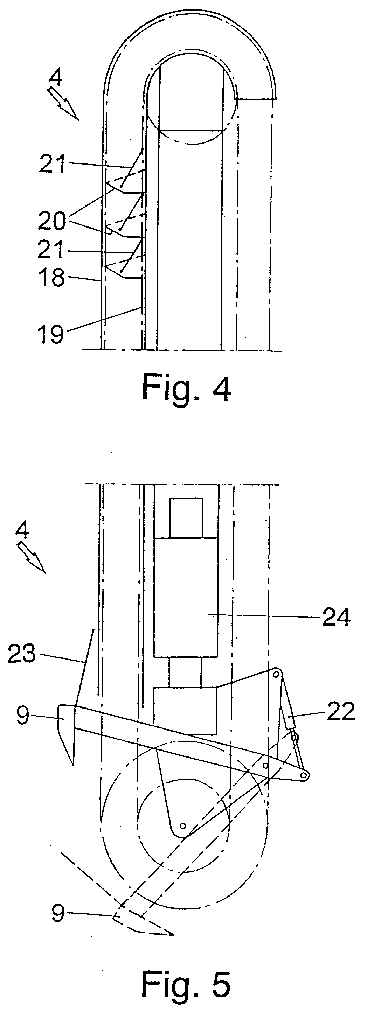

Das in Fig. 1 dargestellte Ausführungsbeispiel zeigt die erfindungsgemäße Vorrichtung bei der Entladung von Losgut aus einem Schiff 1. Die Vorrichtung besteht im wesentlichen aus einem parallel zu dem Schiff 1 verfahrbaren Portal 2 mit einem darauf angeordneten heb-, senk- und drehbaren Ausleger 3, an dessen Spitze ein Schalenelevator 4 angebracht ist. An seinem unteren Umlenkende weist der Schalenelevator 4 zwei gegenläufig arbeitende Zuführ- und Stopfschnecken 5 auf, die quer zu dem Schalenelevator 4 angeordnet sind. Der Schalenelevator 4 ist in einem an dem Ausleger 3 vorgesehenen Drehpunkt 6 angelenkt. Mittels einer durch zwei nebeneinander angeordneten Hydraulikzylindern 7.1 und 7.2 gebildeten Hydraulik kann der Schalenelevator 4 - bei gleichzeitiger Auf- bzw. Abbewegung des Auslegers 3 - derart hin- und herbewegt werden, daß das untere Ende des Schalenelevators 4 sich parallel zum Boden des Schiffes bewegt. Diese Bewegung - die mit einem Doppelpfeil 8 angedeutet ist - erfolgt quer zum Schiff 1. Die Zuführ- und Stopfschnecken 5 sind mit der unteren Umlenkwelle des Schalenelevators 4 fest gekoppelt. An dem unteren Umlenkende des Schalenelevators 4 ist ein quer zu den Zuführ- und Stopfschnecken 5 verlaufendes Schild 9 angebracht, das hydraulisch heb- und senkbar ist. Der Einlaufquerschnitt 10 des Schalenelevators 4 ist mit einem einstellbaren Durchsatzbegrenzer 23 versehen (vgl. Fig. 5). Die Übergabe des aus dem Schiff 1 entladenen Losgutes von dem Schalenelevator 4 auf das Auslegerband 11 (vgl. Fig. 2) erfolgt über eine Übergabeschurre 12, die seitlich aus dem Schalenelevator 4 herausragt und sich bis zu dem Auslegerband 11 erstreckt. Die Übergabe des aus dem Schiff 1 entladenen Losgutes von dem Auslegerband 11 auf ein im Bereich des Portals 2 angeordnetes Kaiband 13 erfolgt mittels einer weiteren Übergabeschurre 14 (Fig. 1).

Damit die Vorrichtung auch für die Beladung des Schiffes 1 verwendet werden kann, ist neben dem Kaiband 13 ein Zubringerband 15 vorgesehen. Über einen - nicht dargestellten - Zwischenförderer gelangt das in das Schiff 1 zu ladende Losgut auf das Auslegerband 11, das reversibel ausgeführt ist. Von dem Auslegerband 11 wird das Losgut mittels einer Beladeschurre 16 in das Schiff 1 geleitet (Fig. 2). Bei schonender Beladung wird das Losgut mittels einer Übergabeschurre in den Schalenelevator geleitet, der dann das Losgut schonend nach unten trägt.

Für das Heben und Senken des Auslegers 3 ist an dessen Gegengewichtsseite ein Hydraulikzylinder 25 angelenkt, dessen anderes Ende über ein mit dem Drehteil des Auslegers 3 fest verbundenem, nach unten gerichtetes Horn 26 gelenkig verlagert ist.

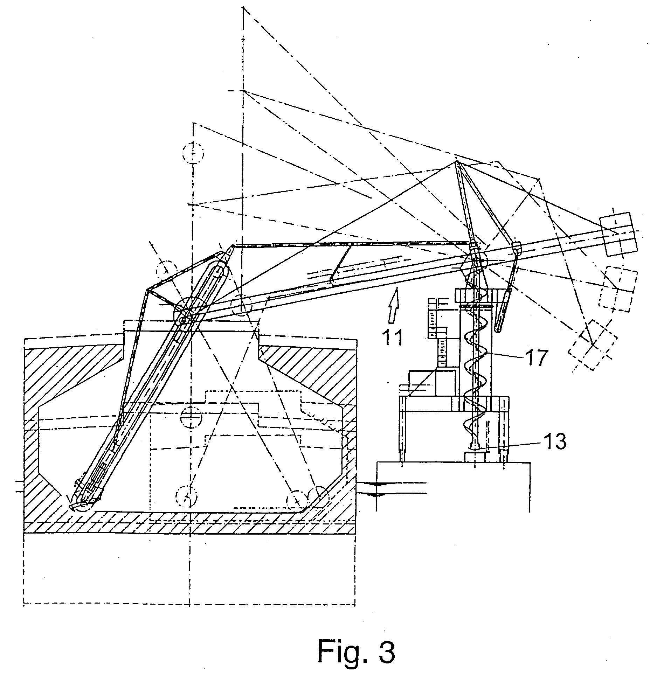

Bei dem in Fig. 3 dargestellten Ausführungsbeispiel, die ein Seeschiff darstellt, ist die Übergabeschurre, mittels der die Übergabe des Losgutes von dem Auslegerband 11 auf das Kaiband 13 erfolgt, als Wendelschurre 17 ausgebildet.

Wie aus Fig. 4 zu ersehen ist, ist der Schalenelevator 4 in seinem Förderbereich von einem Gehäuse 18 völlig umschlossen. Der Schalenelevator 4 ist als Kettenförderer mit einer oder mehreren Ketten 19 ausgebildet, wobei als Ketten 19 Rundgliederketten oder Laschenketten verwendet werden können. An den Ketten 19 sind in bestimmten Abständen geschlossene schalenförmig gebogene Mitnehmer 20 befestigt. Durch ebenfalls an den Ketten 19 befestigte Streben 21 sind die Mitnehmer 20 abgespannt.

In Fig. 5 ist das im unteren Abschnitt des Schalenelevators 4 vorgesehene Schild 9 in zwei Stellungen - eine in Vollinien und eine in gestrichelten Linien - angedeutet. Die Stellung des Schildes 9 kann mittels eines Hydraulikzylinders 22 den jeweiligen Erfordernissen angepaßt werden.

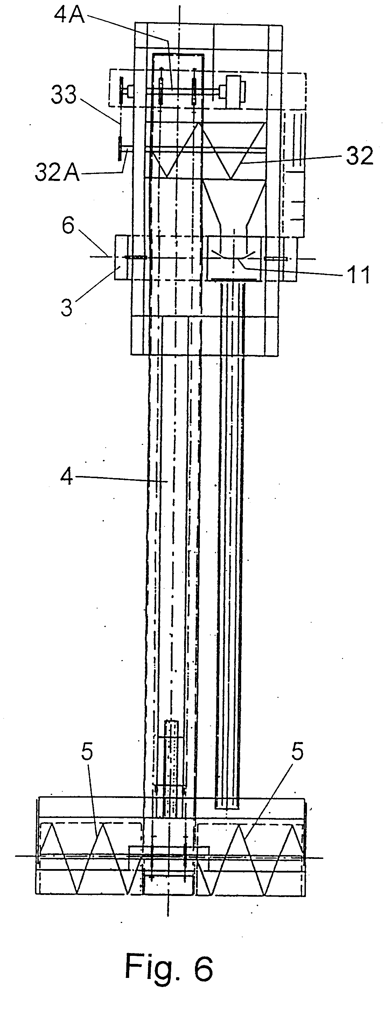

Bei dem in Fig. 6 dargestellte Ausführungsbeispiel ist an der Spitze des Ausleger 3 der Vorrichtung ein Schalenelevator 4 angebracht. An seinem unteren Umlenkende weist der Schalenelevator 4 zwei gegenläufig arbeitende, quer zu dem Schalenelevator 4 angeordnete Zuführ- und Stopfschnecken 5 auf. Der Schalenelevator 4 ist in einem an dem Ausleger 3 vorgesehenen Drehpunkt 6 angelenkt. Die Zuführ- und Stopfschnecken 5 sind mit der unteren Umlenkwelle des Schalenelevators 4 fest gekoppelt.

Die Übergabe des aus dem Schiff 1 entladenen Losgutes von dem Schalenelevator 4 auf ein Auslegerband 11 erfolgt über einen Schneckenförderer 32, der seitlich aus dem Schalenelevator 4 herausragt und sich bis zu dem Auslegerband 11 erstreckt. Die Antriebswelle 32A des Schneckenförderers 32 und die Antriebswelle 4A des Schalenelevators 4 sind durch ein Kettenvorgelege 33 miteinander verbunden.

## Patentansprüche

1. Vorrichtung zum kontinuierlichen Entladen von Losgut aus Schiffen oder sonstigen Behältnissen, beispielsweise Waggons o. dgl., die auch zur Beladung der Schiffe und der sonstigen Behältnisse verwendbar ist, mit einem parallel zu dem Schiff bzw. dem sonstigen Behältnis verfahrbaren Portal und einem darauf angeordneten heb-, senk- und drehbaren Ausleger, **dadurch gekennzeichnet**, daß an der Spitze des Auslegers (3) ein Schalenelevator (4) angebracht ist, der an seinem unteren Umlenkende zwei gegenläufig arbeitende und zwangsgetriebene Zuführ- und Stopfschnecken (5) aufweist, die quer zu dem Schalenelevator (4) angeordnet sind, wobei der Schalenelevator (4) in einem an dem Ausleger (3) vorgesehenen Drehpunkt (6) angelenkt und - bei gleichzeitiger Auf- bzw. Abbewegung des Auslegers (3) - mittels einer Hydraulik derart hin- und herbewegbar ist, daß das untere Ende des Schalenelevators (4) sich parallel zum Boden des Schiffes (1) bzw. des sonstigen Behältnisse bewegt.

2. Vorrichtung nach Anspruch 1, dadurch gekennzeichnet, daß die Hydaulik zwei hintereinander angeordnete Hydraulikzylinder (7.1 und 7.2) aufweist, die jeweils gleichzeitig betätigt werden können und die zwischen dem oberen Ende des Schalenelevators (4) und dem Ausleger (3) angeordnet sind.

3. Vorrichtung nach Anspruch 1 oder 2, dadurch gekennzeichnet, daß für das Heben und Senken des Auslegers (3) an dessen Gegengewichtsseite ein Hydraulikzylinder (25) angelenkt ist, dessen anderes Ende über ein mit dem Drehteil des Auslegers (3) fest verbundenem, nach unten gerichtetetes Horn (26) gelenkig verlagert ist

4. Vorrichtung nach Anspruch 1, 2 oder 3, dadurch gekennzeichnet, daß der Schalenelevator (4) in seinem Förderbereich von einem Gehäuse (18) vollständig umschlossen ist.

5. Vorrichtung nach einem der Ansprüche 1 bis 4, dadurch gekennzeichnet, daß der Schalenelevator (4) als Kettenförderer mit einer oder mehreren zwischen zwei Umlenkstationen gespannten Ketten (19) ausgebildet ist, wobei an den Ketten (19) in bestimmten Abständen geschlossene schalenförmig gebogene Mitnehmer (20) mittels Bolzen befestigt sind.

6. Vorrichtung nach Anspruch 5, dadurch gekennzeichnet, daß die schalenförmig gebogenen Mitnehmer (20) des Schalenelevators (4) mit mindestens einer, ebenfalls mittels Bolzen an den Ketten (19) befestigten Strebe (21) gehalten sind.

7. Vorrichtung nach Anspruch 6, dadurch gekennzeichnet, daß der Bolzen, mit dem eine Strebe (21) eines bestimmten Mitnehmers (20) an der Kette befestigt ist, gleichzeitig zur Befestigung des darüberliegenden Mitnehmers (20) dient.

8. Vorrichtung nach einem der Ansprüche 1 bis 7, dadurch gekennzeichnet, daß die an dem Schalenelevator (4) angeordneten Zuführ- und Stopfschnecken (5) mit der unteren Umlenkwelle des Schalenelevators (4) fest gekoppelt sind.

9. Vorrichtung nach einem der Ansprüche 1 bis 8, dadurch gekennzeichnet, daß an dem Schalenelevator (4) ein quer zu den Zuführ- und Stopfschnecken (5) verlaufendes, hydraulisch heb- und senkbares Schild (9) angeordnet ist.

10. Vorrichtung nach einem der Ansprüche 1 bis 9, dadurch gekennzeichnet, daß der Einlaufquerschnitt (10) des Schalenelevators (4) mit einem einstellbaren Durchsatzbegrenzer (23) versehen ist.

11. Vorrichtung nach einem der Ansprüche 1 bis 10, dadurch gekennzeichnet, daß für die Übergabe des aus dem Schiff (1) entladenen Losgutes von dem Schalenelevator (4) auf das Auslegerband (11) eine Übergabeschurre (12) vorgesehen ist, die seitlich aus dem Schalenelevator (4) herausragt und die sich bis zum Auslegerband (11) erstreckt.

12. Vorrichtung nach einem der vorhergehenden Ansprüche, dadurch gekennzeichnet, daß der Ausleger (3) als Rohr oder als Kastenkonstruktion und das Auslegerband (11) als Gleitförderer ausgebildet ist, wobei der Innenraum des Auslegers (3) mit einem Zwischenboden versehen ist, auf den sich der Obergurt des Auslegerbandes (5) abstützt, während der Untergurt des Auslegerbandes (5) auf der Unterseite des Innenraums des Auslegers (3) gleitet.

13. Vorrichtung nach einem der vorhergehenden Ansprüche, dadurch gekennzeichnet, daß für die Übergabe des Losgutes von dem Auslegerband (11) auf ein im Bereich des Portals (2) angeordnetes Förderband, beispielsweise auf ein Kaiband (13), eine Übergabeschurre (14) vorgesehen ist.

14. Vorrichtung nach einem der vorhergehenden Ansprüche, dadurch gekennzeichnet, daß die Übergabeschurre als Wendelschurre (17) ausgebildet ist.

15. Vorrichtung nach einem der Ansprüche 1 bis 12, dadurch gekennzeichnet, daß das Auslegerband (11) reversibel ausgebildet ist und daß für die Beladung des Schiffes (1) bzw. des sonstigen Behältnisses eine Beladeschurre (16) vorgesehen ist, die das in das Schiff (1) bzw. in das sonstige Behältnis zu ladende Losgut von dem Auslegerband (11) in das Schiff (1) bzw. in das sonstige Behältnis leitet.

16. Vorrichtung nach Anspruch 15, dadurch gekennzeichnet, daß im Bereich des Portals (2) ein Zubringerband (15) vorgesehen ist, dessen Gurt mittels eines an dem Portal (2) angehängten - und somit mitfahrenden - Bandschleifenwagens angehoben wird, um das Losgut auf einen Zwischenförderer abzuwerfen.

17. Vorrichtung nach Anspruch 15 oder 16, dadurch gekennzeichnet, daß zwischen dem Auslegerband (11) und dem Schalenelevator (4) eine mit dem Auslegerband (11) mitschwenkende Übergabeschurre (14) vorgesehen ist.

18. Vorrichtung nach einem der vorhergehenden Ansprüche, dadurch gekennzeichnet, daß für die Übergabe des aus dem Schiff (1) entladenen Losgutes von dem Schalenelevator (4) auf das Auslegerband (11) ein Schneckenförderer (32) vorgesehen ist, der seitlich aus dem Schalenelevator (4) herausragt und sich bis zum Auslegerband (11) erstreckt.

19. Vorrichtung nach Anspruch 18, dadurch gekennzeichnet, daß der Schneckenförderer (32) horizontal zentrisch unter der Umkehrung des Schalenelevators (4), parallel zur Umkehrwelle, zwischen den auf- und abwärtsfördernden Kettensträngen angeordnet ist.

20. Vorrichtung nach Anspruch 18 oder 19, dadurch gekennzeichnet, daß die Antriebswelle (32A) des Schneckenförderer (32) mit der Antriebswelle (4A) des Schalenelevator (4) verbunden ist.

21. Vorrichtung nach Anspruch 20, dadurch gekennzeichnet, daß die Verbindung zwischen der Antriebswelle (32A) des Schneckenförderer (32) und der Antriebswelle (4A) des Schalenelevators (4) als Kettenvorgelege (33) ausgebildet ist.

22. Vorrichtung nach einem der vorhergehenden Ansprüche, dadurch gekennzeichnet, daß am unteren Ende des Schalenelevators (4) ein Hydraulikzylinder (24) vorgesehen ist, mit dem das untere Umlenkrad bzw. die unteren Umlenkräder zusammen mit dem Schild (9) angehoben und abgesenkt werden können.
